# EUROPÄISCHE PATENTSCHRIFT

(11) **EP 0 750 003 B1**
(45) Veröffentlichungstag und Bekanntmachung des Hinweises auf die Patenterteilung: **14.08.2002**
(21) Anmeldenummer: 96109273.1
(22) Anmeldetag: 10.06.1996
(51) Int. Cl.: C08G 69/26, C08G 69/04, C08G 69/32, C08G 73/22, G03F 7/023

(54) **Verfahren zur Herstellung von Poly-o-hydroxyamiden**
Process for the preparation of poly-o-hydroxyamides
Procédé de préparation de poly-o-hydroxy amides

(30) Priorität: 19.06.1995 DE 19522157
(43) Veröffentlichungstag der Anmeldung: 27.12.1996
(73) Patentinhaber: Infineon Technologies AG, 81669 München (DE)
(72) Erfinder: Sezi, Recai, Dr., 91341 Röttenbach (DE); Ahne, Hellmut, Dr., 91341 Röttenbach (DE); Rissel, Eva, 91301 Forchheim (DE)
(74) Vertreter: Müller - Hoffmann & Partner

(56) Entgegenhaltungen:
- EP-A- 0 264 678
- EP-A- 0 291 779
- GB-A- 1 142 071

## Beschreibung

Die Erfindung betrifft ein Verfahren zur Herstellung von Poly-o-hydroxyamiden durch Umsetzung eines aktivierten Dicarbonsäurederivates mit einem Bis-o-aminophenol.

In der Mikroelektronik werden hochwärmebeständige Polymere benötigt, insbesondere als Schutz- und Isolierschichten bzw. als Dielektrika (siehe dazu beispielsweise: "SAMPE Journal", Vol. 25 (1989), No. 6, Seiten 18 bis 23, und "Proceedings of the 1992 International Conference on Multichip Modules", Seiten 394 bis 400). Einige der verwendeten Polymere, beispielsweise Homo- und Copolymere aromatischer Polyether sowie Vorstufen von Polyimiden (PI) und Polybenzoxazolen (PBO), weisen eine gute Löslichkeit in organischen Lösungsmitteln und gute Filmbildungseigenschaften auf und können mittels Schleudertechnik auf elektronische Bauteile aufgebracht werden (siehe dazu beispielsweise: "High Performance Polymers", Vol. 4 (1992), No. 2, Seiten 73 bis 80, und "Polymers for Advanced Technologies", Vol. 4 (1993), Seiten 217 bis 233). Polymer-Vorstufen der genannten Art werden durch eine Temperaturbehandlung cyclisiert, d.h. in die entsprechenden Polymere (PI bzw. PBO) umgewandelt; dabei ergeben sich die endgültigen Eigenschaften.

Die Eigenschaften von Polymer-Vorstufen hängen nicht nur von der Art des Polymers, sondern auch von dessen Molmasse ab. Einige der für die vorstehend genannten Anwendungen wichtigen Polymereigenschaften, beispielsweise die Glasübergangstemperatur oder die mechanische Festigkeit, können durch Vergrößerung der Molmasse erhöht, d.h. verbessert werden. Allerdings ist für diese Anwendungen die obere Grenze der Molmasse beispielsweise durch die Löslichkeit gegeben, da die Löslichkeit mit steigender Molmasse abnimmt. Bei den bislang bekannten Herstellungsverfahren wird die Molmasse in erster Linie durch das Molverhältnis der Ausgangssubstanzen geregelt, was aber mit Nachteilen verbunden ist.

PI- und PBO-Vorstufen können, beispielsweise durch Zusatz geeigneter photoaktiver Komponenten, auch photosensitiv eingestellt und dadurch direkt, d.h. ohne die Verwendung eines Hilfsresists, strukturiert werden. Bei der Verwendung alkalilöslicher Vorstufen ergibt sich bei photosensitiven PBO-Vorstufen - im Vergleich mit den meisten photosensitiven PI-Vorstufen - der Vorteil einer Strukturierbarkeit im positiven Modus und die Möglichkeit einer wäßrig-alkalischen Entwicklung (siehe dazu: EP-PS 0 023 662, EP-OS 0 264 678 und EP-PS 0 291 779). Der dabei angewendete photolithographische Prozeß ist, bis auf die Cyclisierung, der gleiche wie bei der Strukturierung bekannter Positivresists auf der Basis von Novolaken und Chinonaziden, eines weltweit in zahlreichen Fertigungslinien eingesetzten Prozesses (siehe dazu beispielsweise: D.S. Soane und Z. Martynenko "Polymers in Microelectronics - Fundamentals and Applications", Elsevier, Amsterdam 1989, Seiten 77 bis 124).

Die gängigste Methode zur Herstellung von alkalilöslichen PBO-Vorstufen, d.h. von Poly-o-hydroxyamiden, ist die Umsetzung eines Dicarbonsäurechlorids mit einem geeigneten Bis-o-aminophenol. Zum Abfangen des bei der Reaktion entstehenden Chlorwasserstoffs wird in der Regel eine lösliche Base, wie Pyridin, zugesetzt (siehe: EP-OS 0 264 678 und EP-PS 0 291 779). Im allgemeinen wird dabei das Bis-o-aminophenol zusammen mit der Base in einem geeigneten Lösungsmittel vorgelegt und das Säurechlorid langsam zugetropft; dabei wird vorzugsweise bei einer Temperatur zwischen -15 und 0°C gearbeitet. Geeignete Lösungsmittel sind beispielsweise N,N-Dimethylacetamid und N-Methylpyrrolidon sowie strukturverwandte Derivate davon.

Bei Kondensationsreaktionen der vorstehend genannten Art zwischen zwei unterschiedlichen Ausgangssubstanzen, d.h. Monomeren, wird die Molmasse des herzustellenden Polymers - neben dem Umsatz - hauptsächlich durch das Molverhältnis der beiden Komponenten geregelt (siehe dazu beispielsweise: B. Vollmert "Polymer Chemistry", Springer-Verlag, New York 1973, Seiten 213 und 214). Die mittlere Molmasse des Polymers ist demnach um so größer, je näher das Molverhältnis bei 1:1 liegt, d.h. beim stöchiometrischen Verhältnis. Mit steigendem Überschuß einer der Komponenten wird dagegen die Molmasse kleiner.

Bei der Herstellung von Poly-o-hydroxyamiden führt ein Molverhältnis von 1:1 in den meisten Fällen zu einer Gelbildung, wodurch das Polymer unbrauchbar wird. Die Gelbildung in der Reaktionslösung erkennt man entweder unmittelbar mit bloßem Auge oder später an einer schwierigen Filtrierbarkeit der Lösung, und zwar insbesondere dann, wenn Filter mit kleiner Porenweite (beispielsweise ≤ 1 µm) verwendet werden, wie dies in der Photolithographie üblich ist. Um dies zu vermeiden, wird eine der Ausgangskomponenten im Überschuß eingesetzt. Dabei ergibt sich außer der Kontrollierbarkeit der Molmasse noch der Vorteil, daß die Endgruppen der Polymergruppen gleich sind und gegebenenfalls mit einem geeigneten Reagenz blockiert werden können, beispielsweise zur Verbesserung der Lagerstabilität oder zum Einbau von Gruppen, die bei hoher Temperatur vernetzen und damit für eine erhöhte Formstabilität sorgen. Der Überschuß an der einen Komponente muß so bemessen sein, daß bei möglichen Wägefehlern oder verunreinigten Substanzen immer ein ausreichender Abstand zum Verhältnis von 1:1 besteht; deshalb empfiehlt sich ein Überschuß von ca. ≥ 10 % (siehe dazu: EP-OS 0 264 678 und EP-PS 0 291 779). Diese Vorgehensweise hat jedoch, wie bereits ausgeführt, den Nachteil, daß Polymere mit vergleichsweise hoher Molmasse nicht hergestellt werden können.

Aufgabe der Erfindung ist es, ein produktionsfreundliches Verfahren anzugeben, mit dem - durch Umsetzung eines aktivierten Dicarbonsäurederivates mit einem Bis-o-aminophenol - alkalilösliche und gelfreie Poly-o-hydroxyamide mit hoher Molmasse hergestellt werden können.

Dies wird erfindungsgemäß dadurch erreicht, daß zu einer Lösung des Bis-o-aminophenols in einem Lacton eine Lösung des aktivierten Dicarbonsäurederivates und zu dem dabei erhaltenen Gemisch ein tertiäres Amin gegeben wird, wobei das Lacton folgende Struktur besitzt: 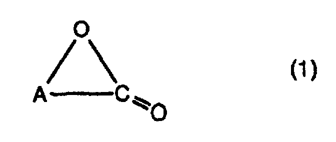 mit
- A: = -(CR¹R²)ₘ- oder -(CR³R⁴)ₙ-NR⁵-,
wobei die Reste R¹ bis R⁵ - unabhängig voneinander - folgende Bedeutung haben:
R¹, R² = Wasserstoff, Alkyl mit 1 bis 7 C-Atomen (linear oder verzweigt), -CO(CH₂)ₚCH₃ oder -COO(CH₂)ₚCH₃ mit p = 0 oder 1
R³, R⁴ = Wasserstoff oder Alkyl mit 1 bis 3 C-Atomen (linear oder verzweigt)
R⁵ = Wasserstoff oder Methyl, und
m eine ganze Zahl von 2 bis 11 und
n eine ganze Zahl von 1 bis 3 ist.

Das Ringglied A ist vorzugsweise folgendermaßen aufgebaut: -(CR¹R²)ₘ- mit m = 2 bis 5, wobei R¹ und R² die vorstehend genannte Bedeutung haben.
Insbesondere wird beim Verfahren nach der Erfindung ein Lacton der Struktur (1) mit A = -(CR¹R²)ₘ- verwendet, wobei m 2 bis 5 ist und R¹ bzw. R² Wasserstoff oder Methyl bedeutet.

Die Erfindung löst das vorstehend geschilderte Problem durch die Verwendung eines Lactons (bestimmter Struktur) als Lösungsmittel und eine spezielle Reaktionsführung. Erfindungsgemäß wird nämlich eine Lösung des Bis-o-aminophenols in dem Lacton vorgelegt, und dieser Lösung wird dann zunächst eine Lösung des Dicarbonsäurederivates, vorzugsweise in einem Lacton, und nachfolgend die Base zugegeben, und zwar unverdünnt oder - vorzugsweise - in Form einer Lösung, vorteilhaft in einem Lacton. Wie die nachfolgenden Beispiele zeigen, führt nur die Kombination aus speziellem Lösungsmittel und bestimmter Reihenfolge der Reaktantenzugabe zum gewünschten Ergebnis.

Die nach dem Verfahren nach der Erfindung hergestellten Poly-o-hydroxyamide zeigen - bei gleichem Überschuß einer der Ausgangskomponenten - eine mehrfach höhere Molmasse als die entsprechend dem Stand der Technik (EP-OS 0 264 678 bzw. EP-PS 0 291 779) hergestellten Polymere. Diese Poly-o-hydroxyamide sind in vielen Lösungsmitteln, wie Aceton, Diethylenglykoldiethylether und N-Methylpyrrolidon, gut löslich. Ein weiterer Vorteil des Verfahrens nach der Erfindung besteht darin, daß durchgehend bei Raumtemperatur (ca. 21 ± 4°C) gearbeitet werden kann, so daß kein zusätzlicher Arbeits- bzw. Kostenaufwand für eine Kühlung erforderlich ist. Die Reaktion kann jedoch auch bei Temperaturen unterhalb Raumtemperatur durchgeführt werden.

Das als Lösungsmittel dienende Lacton kann vorteilhaft auch zusammen mit einem weiteren Lösungsmittel eingesetzt werden, und zwar dann, wenn sein Anteil mindestens 50 Vol.-% beträgt. Das weitere Lösungsmittel ist vorzugsweise N-Methylpyrrolidon oder N,N-Dimethylacetamid, wobei auch Lösungsmittelgemische verwendet werden können. Als Lacton ist γ-Butyrolacton besonders bevorzugt (A = -(CH₂)₃-, d.h. es liegt ein 5-Ring vor). Dies ist ein sehr produktionsfreundliches Lösungsmittel, weil es kommerziell in großen Mengen kostengünstig verfügbar ist und einen hohen Flammpunkt (104°C) sowie eine hohe Zündtemperatur (455°C) besitzt.

Als weitere Lactone seien beispielhaft genannt: β-Propiolacton, β-Butyrolacton, γ-Butyrolacton-γ-carbonsäureethylester, α-Methyl-γ-butyrolacton, γ-Valerolacton, δ-Valerolacton, γ-Caprolacton, ε-Caprolacton, Nonansäure-γ-lacton, Undecansäure-γ-lacton, Undecansäure-δ-lacton, Undecansäure-ω-lacton, 4-Hydroxydecansäurelacton, 5-Hydroxydecansäurelacton, 5-Hydroxydodecansäurelacton und 12-Hydroxydodecansäurelacton. Eine Lactongruppierung weisen auch folgende Verbindungen auf: 2-Oxazolidinon (A = -(CH₂)₂-NH-, wobei NH an CO gebunden ist), 3-Methyl-2-oxazolidinon und 4-Isopropyl-2-oxazolidinon.

Beim Verfahren nach der Erfindung können auch Mischungen von aktivierten Dicarbonsäurederivaten und/oder Mischungen von Bis-o-aminophenolen verwendet werden. Das aktivierte Dicarbonsäurederivat ist vorteilhaft ein Dicarbonsäurehalogenid, insbesondere ein Säurechlorid, oder ein Dicarbonsäureester. Das tertiäre Amin, d.h. die Base, ist vorzugsweise Pyridin oder Triethylamin. Weitere mögliche Basen sind heterocyclische tertiäre Stickstoffverbindungen, wie Chinolin, und aliphatische tertiäre Amine, wie Methyldiethylamin, sowie aliphatisch-aromatische tertiäre Amine, wie N,N-Dimethylanilin.

Wird beim Verfahren nach der Erfindung ein Überschuß an Bis-o-aminophenol eingesetzt, dann können die Aminoendgruppen des hergestellten Poly-o-hydroxyamids mit einem Dicarbonsäureanhydrid verkappt, d.h. blockiert werden. Hierzu eignet sich insbesondere cis-5-Norbornen-endo-2,3-dicarbonsäureanhydrid.

Anhand von Ausführungsbeispielen soll die Erfindung noch näher erläutert werden.

### Beispiel 1

Zu einer Lösung von 14,64 g (0,04 mol) Hexafluor-2,2-bis-(4-hydroxy-3-aminophenyl)-propan in 132 ml γ-Butyrolacton wird bei Raumtemperatur unter Rühren eine Lösung von 9,44 g (0,032 mol) Diphenylether-4,4'-dicarbonsäurechlorid in 85 ml γ-Butyrolacton zugetropft. Zu dem dabei erhaltenen Gemisch wird dann eine Lösung von 10,12 g (0,128 mol) Pyridin in 10 ml γ-Butyrolacton bei Raumtemperatur langsam zugetropft und die entstandene Reaktionslösung weitere 20 h bei Raumtemperatur gerührt. Anschließend werden die Endgruppen blockiert, wozu bei Raumtemperatur eine Lösung von 2,62 g (0,016 mol) cis-5-Norbornen-endo-2,3-dicarbonsäureanhydrid in 25 ml γ-Butyrolacton zugegeben und dann weitere 24 h gerührt wird. Danach wird die Reaktionslösung mit einer Mischung aus Isopropanol und Wasser ausgefällt, gewaschen und getrocknet.

Durch Gelpermeationschromatographie wird für das auf diese Weise hergestellte Poly-o-hydroxyamid eine Molmasse von 32000 g/mol (Gewichtsmittel) ermittelt. Das Poly-o-hydroxyamid ist in kommerziellen wäßrig-alkalischen Entwicklern klar löslich. Eine Lösung von 30 Masse-% des Polymers, beispielsweise in Diethylenglykoldiethylether, ist problemlos über eine Plastikspritze, versehen mit einem Membranfilter einer Porengröße von 1 um, filtrierbar.

### Beispiel 2 (Vergleichsversuch)

Entsprechend dem Stand der Technik (EP-OS 0 264 678 bzw. EP-PS 0 291 779) werden 14,64 g (0,04 mol) Hexafluor-2,2-bis-(4-hydroxy-3-aminophenyl)-propan zusammen mit 10,12 g (0,128 mol) Pyridin in 132 ml N,N-Dimethylacetamid unter Rühren gelöst, und das erhaltene Gemisch wird dann auf eine Temperatur von -10°C abgekühlt. Zu diesem Gemisch wird eine Lösung von 9,44 g (0,032 mol) Diphenylether-4,4'-dicarbonsäurechlorid in 85 ml N,N-Dimethylacetamid langsam zugetropft. Nachfolgend wird die dabei erhaltene Reaktionslösung zuerst weitere 60 min bei -10°C und dann 20 h bei Raumtemperatur gerührt. Zur Blockierung der Endgruppen wird anschließend bei Raumtemperatur eine Lösung von 2,62 g (0,016 mol) cis-5-Norbornen-endo-2,3-dicarbonsäureanhydrid in 25 ml N,N-Dimethylacetamid zugegeben, und dann wird weitere 24 h gerührt. Danach wird die Reaktionslösung mit einer Mischung aus Isopropanol und Wasser ausgefällt, gewaschen und getrocknet.

Die mittels Gelpermeationschromatographie - unter identischen Bedingungen wie in Beispiel 1 - ermittelte Molmasse des Polymers beträgt lediglich 6500 g/mol (Gewichtsmittel). Das gleiche Ergebnis wird auch erhalten, wenn das Säurechlorid - anstatt in N,N-Dimethylacetamid - in Cyclohexanon gelöst wird.

### Beispiel 3 (Vergleichsversuch)

Die Polymerisation erfolgt in entsprechender Weise wie in Beispiel 1, jedoch mit dem Unterschied, daß als Lösungsmittel - anstelle von γ-Butyrolacton - N,N-Dimethylacetamid verwendet wird. Die mittels Gelpermeationschromatographie - unter identischen Bedingungen wie in Beispiel 1 - ermittelte Molmasse des Polymers beträgt lediglich 4500 g/mol (Gewichtsmittel).

### Beispiel 4 (Vergleichsversuch)

Die Polymerisation erfolgt in entsprechender Weise wie in Beispiel 2, jedoch mit dem Unterschied, daß als Lösungsmittel - anstelle von N,N-Dimethylacetamid - γ-Butyrolacton verwendet wird. Nach dem 20stündigen Rühren bei Raumtemperatur, d.h. vor einer Blockierung der Endgruppen, werden in der Reaktionslösung mit bloßem Auge zahlreiche Gelpartikel festgestellt. Die Reaktionslösung bzw. das entstandene Polymer ist somit für den gewünschten Zweck unbrauchbar.

## Patentansprüche

1. Verfahren zur Herstellung von Poly-o-hydroxyamiden durch Umsetzung eines aktivierten Dicarbonsäurederivates mit einem Bis-o-aminophenol, **dadurch gekennzeichnet, daß** zu einer Lösung des Bis-o-aminophenols in einem Lacton eine Lösung des aktivierten Dicarbonsäurederivates und zu dem dabei erhaltenen Gemisch ein tertiäres Amin gegeben wird, wobei das Lacton folgende Struktur besitzt: 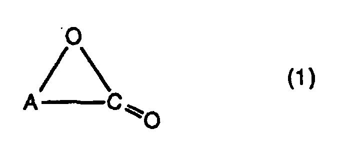 mit
A = -(CR¹R²)ₘ- oder -(CR³R⁴)ₙ-NR⁵-,
wobei die Reste R¹ bis R⁵ - unabhängig voneinander - folgende Bedeutung haben:
R¹, R² = Wasserstoff, Alkyl mit 1 bis 7 C-Atomen, -CO(CH₂)ₚCH₃ oder -COO(CH₂)ₚCH₃ mit p = 0 oder 1
R³, R⁴ = Wasserstoff oder Alkyl mit 1 bis 3 C-Atomen
R⁵ = Wasserstoff oder Methyl, und
m eine ganze Zahl von 2 bis 11 und
n eine ganze Zahl von 1 bis 3 ist.

2. Verfahren nach Anspruch 1, **dadurch gekennzeichnet, daß** ein Lacton der Struktur (1) verwendet wird, wobei folgendes gilt:
A = -(CR¹R²)ₘ- mit R¹, R² = Wasserstoff oder Methyl und m = 2 bis 5.

3. Verfahren nach Anspruch oder 2, **dadurch gekennzeichnet, daß** das aktivierte Dicarbonsäurederivat ein Säurehalogenid oder ein Säureester ist.

4. Verfahren nach einem der Ansprüche 1 bis 3, **dadurch gekennzeichnet, daß** eine Lösung des tertiären Amins verwendet wird.

5. Verfahren nach einem oder mehreren der Ansprüche 1 bis 4, **dadurch gekennzeichnet, daß** das tertiäre Amin Pyridin oder Triethylamin ist.

6. Verfahren nach einem oder mehreren der Ansprüche 1 bis 5, **dadurch gekennzeichnet, daß** Mischungen von aktivierten Dicarbonsäurederivaten und/oder Mischungen von Bis-o-aminophenolen verwendet werden.

7. Verfahren nach einem oder mehreren der Ansprüche 1 bis 6, **dadurch gekennzeichnet, daß** das Lacton zusammen mit einem weiteren Lösungsmittel eingesetzt wird, wobei der Anteil des Lactons ≥ 50 Vol.-% beträgt.

8. Verfahren nach Anspruch 7, **dadurch gekennzeichnet, daß** das weitere Lösungsmittel N-Methylpyrrolidon oder N,N-Dimethylacetamid ist.

9. Verfahren nach einem oder mehreren der Ansprüche 1 bis 8, **dadurch gekennzeichnet, daß** das Lacton γ-Butyrolacton ist.

10. Verfahren nach einem oder mehreren der Ansprüche 1 bis 9, **dadurch gekennzeichnet, daß** Aminoendgruppen des hergestellten Poly-o-hydroxyamids mit einem Dicarbonsäureanhydrid verkappt werden.

## Claims

1. Process for preparing poly-o-hydroxyamides by reacting an activated dicarboxylic acid derivative with a bis-o-aminophenol, **characterized in that** a solution of the activated dicarboxylic acid derivative is added to a solution of the bis-o-aminophenol in a lactone and a tertiary amine is added to the resulting mixture, where the lactone has the following structure: 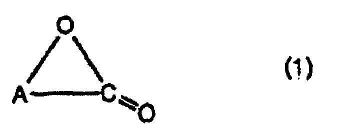 where
A = -(CR¹R²)ₘ or -(CR³R⁴)ₙ-NR⁵-,
where the radicals R¹ to R⁵ have, independently of one another, the following meanings:
R¹, R² = hydrogen, alkyl having from 1 to 7 carbon atoms (linear or branched), -CO(CH₂)ₚCH₃ or -COO(CH₂)ₚCH₃, where p = 0 or 1,
R³, R⁴ = hydrogen or alkyl having from 1 to 3 carbon atoms (linear or branched),
R⁵ = hydrogen or methyl, and
m is an integer from 2 to 11 and
n is an integer from 1 to 3.

2. Process according to Claim 1, **characterized in that** the lactone used is a lactone of the structure (1) in which:
A = -(CR¹R²)ₘ- where R¹, R² = hydrogen or methyl and m = 2 to 5.

3. Process according to Claim 1 or 2, **characterized in that** the activated dicarboxylic acid derivative is an acid halide or an ester.

4. Process according to any of Claims 1 to 3, **characterized in that** a solution of the tertiary amine is used.

5. Process according to one or more of Claims 1 to 4, **characterized in that** the tertiary amine is pyridine or triethylamine.

6. Process according to one or more of Claims 1 to 5, **characterized in that** mixtures of activated dicarboxylic acid derivatives and/or mixtures of bis-o-aminophenols are used.

7. Process according to one or more of Claims 1 to 6, **characterized in that** the lactone is used together with a further solvent and the proportion of the lactone is ≤ 50% by volume.

8. Process according to Claim 7, **characterized in that** the further solvent is N-methylpyrrolidone or N,N-dimethylacetamide.

9. Process according to one or more of Claims 1 to 8, **characterized in that** the lactone is γ-butyrolactone.

10. Process according to one or more of Claims 1 to 9, **characterized in that** amino end groups of the poly-o-hydroxyamide prepared are capped by a dicarboxylic anhydride.

## Revendications

1. Procédé de préparation de poly-o-hydroxyamides par réaction d'un dérivé activé d'acide dicarboxylique sur un bis-o-aminophénol, **caractérisé en ce que** l'on ajoute à une solution du bis-o-aminophénol dans une lactone une solution du dérivé activé d'acide dicarboxylique et au mélange ainsi obtenu on ajoute une amine tertiaire, la lactone ayant la structure suivante: 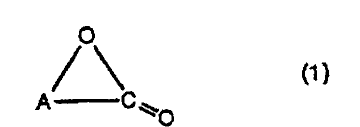 avec
A = -(CR¹R²)ₘ- ou -(CR³R⁴)ₙ-NR⁵-,
dans laquelle les radicaux R¹ à R⁵ ont, indépendamment les uns des autres, la signification suivante :
R¹, R² = hydrogène, alkyle ayant de 1 à 7 atomes de carbone, -CO(CH₂)ₚCH₃ ou -COO(CH₂)ₚCH₃ avec p = 0 ou 1
R³, R⁴ = hydrogène ou alkyle ayant de 1 à 3 atomes de carbone
R⁵ = hydrogène ou méthyle, et
m est un nombre entier de 2 à 11 et
n est un nombre entier de 1 à 3.

2. Procédé suivant la revendication 1, **caractérisé en ce que** l'on utilise une lactone de structure (1) dans laquelle :
A = -(CR¹R²)ₘ- avec R¹, R² = hydrogène ou méthyle et m = 2 à 5.

3. Procédé suivant la revendication 1 ou 2, **caractérisé en ce que** le dérivé activé d'acide dicarboxylique est un halogénure d'acide ou un ester d'acide.

4. Procédé suivant l'une des revendications 1 à 3, **caractérisé en ce que** l'on utilise une solution de l'amine tertiaire.

5. Procédé suivant l'une ou plusieurs des revendications 1 à 4, **caractérisé en ce que** l'aminé tertiaire est la pyridine ou la triéthylamine.

6. Procédé suivant l'une ou plusieurs des revendications 1 à 5, **caractérisé en ce que** l'on utilise des mélanges de dérivés activés d'acide dicarboxylique et/ou des mélanges de bis-o-aminophénols.

7. Procédé suivant l'une ou plusieurs des revendications 1 à 6, **caractérisé en ce que** l'on engage la lactone en même temps qu'un autre solvant, la proportion de la lactone étant supérieure ou égale à 50 % en volume.

8. Procédé suivant la revendication 7, **caractérisé en ce que** l'autre solvant est la N-méthylpyrrolidone ou le N,N-diméthylacétamide.

9. Procédé suivant l'une ou plusieurs des revendications 1 à 8, **caractérisé en ce que** la lactone est la γ-butyrolactone.

10. Procédé suivant l'une ou plusieurs des revendications 1 à 9, **caractérisé en ce que** l'on protège des groupes d'extrémité amino du poly-o-hydroxyamide préparé par un anhydride d'acide dicarboxylique.
